(19) Europäisches Patentamt
European Patent Office
Office européen des brevets

(11) **EP 3 647 817 A1**

(12) **EUROPEAN PATENT APPLICATION**
published in accordance with Art. 153(4) EPC

(43) Date of publication:
**06.05.2020 Bulletin 2020/19**

(21) Application number: **18825136.7**

(22) Date of filing: **29.05.2018**

(51) Int Cl.:
**G01S 15/60** (2006.01)          **G01S 19/42** (2010.01)
**G01S 19/53** (2010.01)          **G01C 21/16** (2006.01)

(86) International application number:
**PCT/JP2018/020513**

(87) International publication number:
**WO 2019/003758 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2017  JP 2017128510**

(71) Applicant: **Furuno Electric Co., Ltd.
Nishinomiya-City, Hyogo 662-8580 (JP)**

(72) Inventors:
• **NAKAMURA, Hiraku
Nishinomiya-City
Hyogo 662-8580 (JP)**

• **TODA, Hiroyuki
Nishinomiya-City
Hyogo 662-8580 (JP)**
• **FUJISAWA, Naomi
Nishinomiya-City
Hyogo 662-8580 (JP)**
• **HINO, Akihiro
Nishinomiya-City
Hyogo 662-8580 (JP)**

(74) Representative: **CSY London
10 Fetter Lane
London EC4A 1BR (GB)**

(54) **TRACK PREDICTION DEVICE, TRACK PREDICTION METHOD, AND TRACK PREDICTION PROGRAM**

(57)     The present disclosure is to calculate an estimated position with high precision. A course estimating device 10 includes an angular velocity calculating part 30, a horizontal ground speed calculating part 70 and an estimated position calculating part 80. The angular velocity calculating part 30 measures or calculate an angular velocity of a movable body. The horizontal ground speed calculating part 70 calculates a horizontal ground speed based on an attitude angle, a ground course, and a ground ship speed of the movable body. The estimated position calculating part 80 calculates an estimated position, using a period of time from a current time point to an estimation time point, the horizontal ground speed, and an integration operation of the angular velocity when the angular velocity exceeds a turning detection threshold.

FIG. 1

**Description**

TECHNICAL FIELD

The present disclosure relates to a course estimating device, a method of estimating a course, and a course estimating program, which estimate a moving position of a movable body.

BACKGROUND ART

Conventionally, various navigation devices having a function for displaying an estimated course has been devised and put in practical use. The conventional navigation devices calculate a distance by multiplying a period of time from the current time point to the estimating time point by the current speed. The conventional navigation devices calculate an estimated position by adding the calculated distance to the current position. Then, the conventional navigation devices calculate the estimated course by successively repeating the calculation of the estimated position.

As such a navigation device, a navigation device described in Patent Document 1 (a ship display device) calculates the estimated position further using the double integral of acceleration.

[Reference Document of Conventional Art]

[Patent Document]

Patent Document 1: JP0428636B

DESCRIPTION OF THE DISCLOSURE

[Problem to be Solved by the Disclosure]

However, in the navigation device of Patent Document 1, since a value obtained by multiplying 1/2th power value of the square of time by acceleration, noise component caused by the observation error etc. of the acceleration increases. Therefore, errors of the estimated position and the estimated course increase.

Therefore, one purpose of the present disclosure is to provide a course estimating device, a method of estimating course, and a course estimating program, which calculate an estimated position with high precision.

[Summary of the Disclosure]

A course estimating device of the present disclosure includes a horizontal ground speed calculating part, an angular velocity calculating part and an estimated position calculating part. The horizontal ground speed calculating part calculates a horizontal ground speed based on an attitude angle, a ground course, and a ground ship speed of a movable body. The angular velocity calculating part measures or calculate an angular velocity of the movable body. The estimated position calculating part calculates an estimated position, using a period of time from a current time point to an estimation time point, the horizontal ground speed, and an integration operation of the angular velocity when the angular velocity exceeds a turning detection threshold.

According to this configuration, the estimated position may be calculated using the integrated value of the acquired angular velocity when the movable body is turning.

[Effect of the Disclosure]

According to the present disclosure, the estimated position can be calculated with high precision.

BRIEF DESCRIPTION OF DRAWINGS

Fig. 1 is a block of a course estimating device according to a first embodiment of the present disclosure.
Fig. 2 is a view illustrating a concept of calculating an estimated position of the first embodiment of the present disclosure.
Figs. 3(A) to 3(D) are views of simulations of course estimation results of the course estimating device of this embodiment and course estimating devices of comparative examples.

Figs. 4(A) and 4(B) are views illustrating standard deviations of estimated courses to an actual course between the course estimating device of this embodiment and the course estimating devices of the comparative examples.
Fig. 5 is a flowchart of course estimation according to the embodiment of the present disclosure.
Fig. 6 is a flowchart of a calculation of the estimated position according to the embodiment of the present disclosure.
Fig. 7 is a block of a course estimating device according to a second embodiment of the present disclosure.

MODES FOR CARRYING OUT THE DISCLOSURE

A course estimating device, a method of estimating a course, and a course estimating program according to a first embodiment of the present disclosure will be described with reference to the figures. Note that, although a mode in which a ship is used as a movable body is illustrated below, the configuration of the present disclosure invention is also applicable to other water-surface, underwater movable bodies, land movable bodies, or air movable bodies.

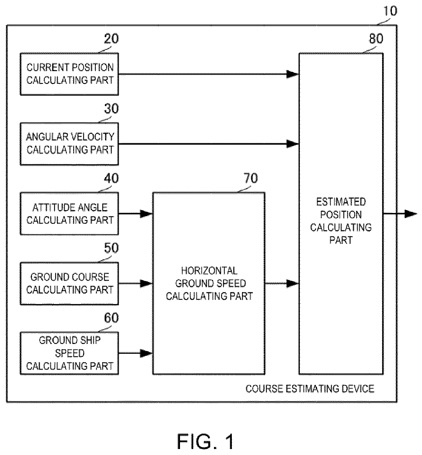

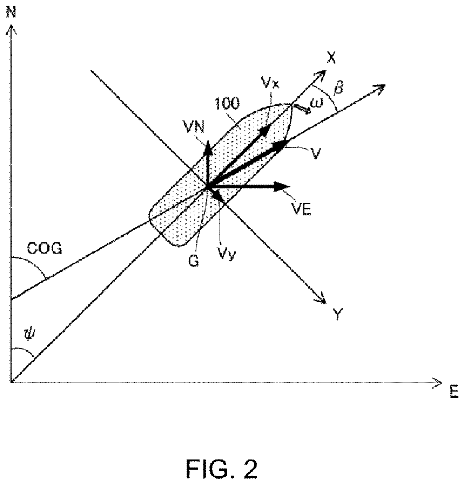

Fig. 1 illustrates a block of the course estimating device according to the first embodiment of the present disclosure. Fig. 2 is a view illustrating a concept of calculating an estimated position of the first embodiment of the present disclosure.

As illustrated in Fig. 1, a course estimating device 10 includes a current position calculating part 20, an angular velocity calculating part 30, an attitude angle calculating part 40, a ground course calculating part 50, a ground ship speed calculating part 60, a horizontal ground speed calculating part 70, and an estimated position calculating part 80.

The current position calculating part 20 may calculate a current position P of a movable body to which the course estimating device 10 is provided. A current position P(0) may have a latitude component Plat(0) and a longitude component Plon(0). The current position calculating part 20 may calculate a current position Pec(0) in the ECEF rectangular coordinate system, for example, by using a code pseudorange etc. of a positioning signal. The current position calculating part 20 may calculate a current position Pec(0) using the positioning signal received by at least one antenna which is mounted to a hull. The current position calculating part 20 may convert, using a coordinate conversion matrix of the ECEF rectangular coordinate system and an ENU coordinate system, the current position Pec(0) in the ECEF rectangular coordinate system into the current position P in the ENU coordinate system, and calculate the latitude component Plat(0) and the longitude component Plon(0) of the current position P. The current position calculating part 20 may output the current position P(0) to the estimated position calculating part 80.

The angular velocity calculating part 30 calculates an angular velocity $\omega(t)$ of the hull. The angular velocity calculating part 30 is, as one example, a gyroscope sensor which is an inertia sensor, and measures and outputs the angular velocity $\omega(t)$. As another example, the angular velocity calculating part 30 may calculate the angular velocity $\omega$ using a carrier phase difference between the positioning signals. In this case, the angular velocity calculating part 30 may calculate the angular velocity $\omega(t)$ using a difference between the carrier phases received by at least two antennas disposed at different positions of the movable body. The angular velocity calculating part 30 may output the angular velocity $\omega(t)$ to the estimated position calculating part 80. By using the carrier phase, highly-accurate angular velocity can be obtained with the simple configuration.

The attitude angle calculating part 40 may calculate an attitude angle of the hull. The attitude angle may be normally comprised of a pitch angle $\varphi(t)$, a roll angle $\theta(t)$, and yaw angle $\psi(t)$. The attitude angle calculating part 40 may calculate at least the yaw angle $\psi(t)$. The attitude angle calculating part 40 may calculate the attitude angle including at least yaw angle $\psi(t)$ by using the angular velocity calculating part 30 and the measurement value or carrier phase difference of the inertia sensor. Note that the attitude angle calculating part 40 may calculate the yaw angle $\psi(t)$ based on the angular velocity calculated by the angular velocity calculating part 30. By using the carrier phase, the highly-accurate attitude angle can be acquired with the simple configuration.

The ground course calculating part 50 may calculate a ground course COG(t) using the attitude angle etc. of the hull. The ground course calculating part 50 may output the ground course COG(t) to the horizontal ground speed calculating part 70.

The ground ship speed calculating part 60 may calculate a ground speed SOG(t) using an output etc. of a Doppler sonar. The ground ship speed calculating part 60 may output the ground speed SOG(t) to the horizontal ground speed calculating part 70.

The horizontal ground speed calculating part 70 calculates a horizontal ground speed Vb(t) in a hull coordinate system using the following method. The horizontal ground speed Vb(t) may be a vector quantity, and is comprised of an x-direction component Vbx(t) and a y-direction component Vby(t). The x-direction may be a component parallel to the bow direction of a ship 100 as illustrated in Fig. 2, and a direction from the stern to the bow may be the positive direction. The y-direction may be perpendicular to the bow direction (x-direction), and a direction from the port to the starboard may be the positive direction.

As illustrated in Fig. 2, the x-direction component Vbx(t) and the y-direction component Vby(t) of the horizontal ground speed Vb(t) may be obtained from the following formula, where the drift angle is $\beta(t)$.

$$Vbx(t) = SOG(t) \cdot \cos\beta(t) \qquad \text{... (Formula 1)}$$

$$Vby(t) = SOG(t) \cdot \sin\beta(t) \qquad \text{... (Formula 2)}$$

Here, the drift angle $\beta$ may be obtained from the ground course COG and the yaw angle $\psi$ by using the following formula.

$$\beta(t) = COG(t) - \psi(t) \qquad \text{... (Formula 3)}$$

The horizontal ground speed calculating part 70 may calculate a horizontal ground speed Vn(t) in the ENU coordinate system using the following formula.

As illustrated in Fig. 2, the horizontal ground speed Vn(t) in the ENU coordinate system (NED coordinate system) and the horizontal ground speed Vb(t) in the hull coordinate system may have a relation in which the yaw angle $\psi$(t) is an angle formed by the two coordinate systems. Therefore, the north direction component VnN(t) and the east direction component VnE(t) of the horizontal ground speed Vn(t) in the ENU coordinate system (NED coordinates system) may be calculated from the x-direction component Vbx(t) and the y-direction component Vby(t) of the horizontal ground speed Vb(t) in the hull coordinate system, and the yaw angle $\psi$(t).

$$VnN(t) = Vbx(t) \cdot \cos\psi(t) - Vby(t) \cdot \sin\psi(t) \qquad \text{... (Formula 4)}$$

$$VnE(t) = Vbx(t) \cdot \sin\psi(t) + Vby(t) \cdot \cos\psi(t) \qquad \text{... (Formula 5)}$$

The horizontal ground speed calculating part 70 may output the horizontal ground speed in the ENU coordinate system [Vn(t) = (VnN(t), VnE(t))] to the estimated position calculating part 80.

The estimated position calculating part 80 calculates an estimated position P($\tau$) at an estimation time $\tau$ using the following method.

At the time t, the following relations may be established between the estimated position P(t) = (Plat(t), Plon(t)) and the horizontal ground speed Vn(t) = (VnN(t), VnE(t)).

$$dPlat(t)/dt = VnN(t) \qquad \text{... (Formula 6)}$$

$$dPlon(t)/dt = VnE(t) \qquad \text{... (Formula 7)}$$

Moreover, the yaw angle $\psi$($\tau$) at the estimation time may be acquired using the yaw angle $\psi$(0) at the initial time, and the integration operation of the angular velocity $\omega$(t) from the initial time t=0 to the estimation time t=$\tau$. Assuming that the ship 100 turns at a constant rate, $\omega$(t) may become a constant value $\omega$ from the initial time t=0 to the estimation time t=$\tau$. Therefore, the yaw angle $\psi$($\tau$) at the estimation time may be acquired by the following formula.

$$\psi(\tau) = \psi(0) + \omega \cdot \tau \qquad \text{... (Formula 8)}$$

Moreover, the estimated position calculating part 80 may determine whether the ship 100 is under translation or turning based on the angular velocity $\omega$. The estimated position calculating part 80 may calculate P($\tau$) = (Plat($\tau$), Plon($\tau$)) according to each of the cases.

If the ship is turning or the yaw angle $\psi$($\tau$) exceeds a turning detection threshold, the estimated position calculating part 80 may calculate the estimated position P($\tau$) = (Plat($\tau$), Plon($\tau$)) using the integration operations of the estimated position (Formulas 6 and 7).

$$\text{Plat}(\tau) = \text{Plat}(0) + (\text{integration operation (VnN)})$$

$$= \text{Plat}(0) + (\text{VnN}(0) \cdot \sin\omega\tau)/\omega - (\text{VnE}(0) \cdot (1-\cos\omega\tau))/\omega$$

$$... \text{(Formula 9)}$$

$$\text{Plon}(\tau) = \text{Plon}(0) + (\text{integration operation (VnE)})$$

$$= \text{Plon}(0) + (\text{VnN}(0) \cdot (1-\cos\omega\tau))/\omega - (\text{VnE}(0) \cdot \sin\omega\tau)/\omega$$

$$... \text{(Formula 10)}$$

That is, the estimated position calculating part 80 may calculate the estimated position $P(\tau)$ using the calculation including the integrated value of the angular velocity which is an acceleration in the turning direction, if the ship 100 is turning.

On the other hand, the estimated position calculating part 80 may calculate the estimated position $P(\tau)$ using the following calculation without using the acceleration (angular velocity), if the ship is during the translation, i.e., the yaw angle $\psi(\tau)$ is below the turning detection threshold.

$$\text{Plat}(\tau) = \text{Plat}(0) + \text{VnN}(0) \cdot \tau \qquad ... \text{(Formula 11)}$$

$$\text{Plon}(\tau) = \text{Plon}(0) + \text{VnE}(0) \cdot \tau \qquad ... \text{(Formula 12)}$$

The estimated position calculating part 80 may output the calculated estimated position $P(\tau) = (\text{Plat}(\tau), \text{Plon}(\tau))$. Moreover, the estimated position calculating part 80 may continuously perform the calculation of the estimated position $P(\tau)$ to calculate the estimated positions $P(\tau)$ at a plurality of time points $\tau$. Then, the estimated position calculating part 80 may obtain an estimated course by connecting the estimated positions $P(\tau)$ at the plurality of time points $\tau$.

By using such a configuration and processing, the course estimating device 10 may reduce the unnecessary use of the acceleration term for calculating the estimated position $P(\tau)$, according to the behavior of the ship 100. Therefore, an increase in the error caused by using the acceleration term can be reduced. Therefore, the course estimating device 10 may calculate the estimated position $P(\tau)$ with high precision. Further, if positional information of the hull obtained by the inertia sensor, such as a speed sensor or an angular velocity sensor (hull coordinates from the center-of-gravity position) is present, the positional information may be corrected to the center-of-gravity position of the hull based on the attitude angle of the hull, thereby calculating the estimated position $P(\tau)$ with higher precision.

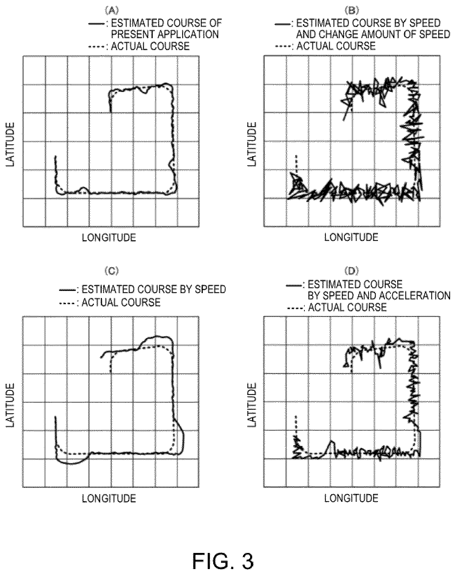

Figs. 3(A) to 3(D) are views of simulations of a course estimation result of the course estimating device of this embodiment and course estimating devices of comparative examples. Fig. 3(A) illustrates the estimated course by using the configuration of the present application, Fig. 3(B) illustrates the estimated course by always using the speed and an amount of change in the speed, Fig. 3(C) illustrates the estimated course by only using the speed, and Fig. 3(D) illustrates the estimated course by always using the speed and the acceleration. In Figs. 3(A), 3(B), 3(C), and 3(D), broken lines illustrate an actual course, and solid lines illustrate the estimated course.

As illustrated in Figs. 3(A), 3(B), 3(C), and 3(D), a difference between the actual course and the estimated course may be reduced by using the configuration of the course estimating device 10 of this embodiment.

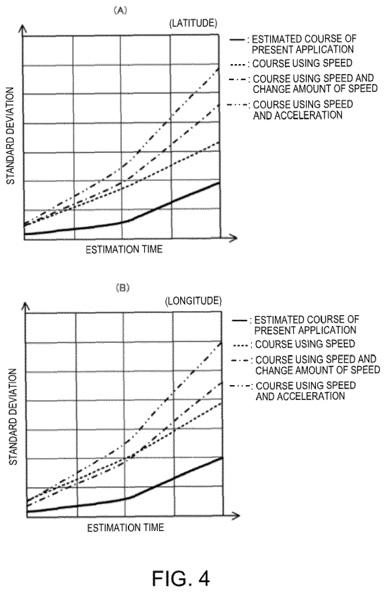

Figs. 4(A) and 4(B) are views illustrating standard deviations of the estimated course to the actual course between the course estimating device of this embodiment and the course estimating devices of the comparative examples. Fig. 4(A) illustrates the standard deviation of the estimated course in latitude, and Fig. 4(B) illustrates the standard deviation of the estimated course in longitude. In Figs. 4(A) and (B), a solid line is the standard deviation of the estimated course of the present application, and a broken line is the standard deviation of the estimated course by only using the speed, a one-dot chain line is the standard deviation of the estimated course by always using the amount of change of speed and speed, and a two-dot chain line is the standard deviation of the estimated course by always using the speed and the acceleration.

As illustrated in Figs. 4(A), 4(B), 4(C), and 4(D), the standard deviation of the estimated course may be reduced by using the configuration of the course estimating device 10 of this embodiment. That is, the error of the estimated course to the actual course may be reduced.

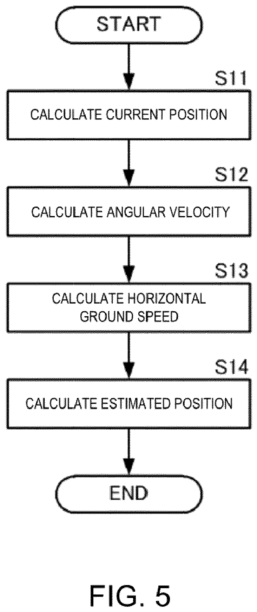

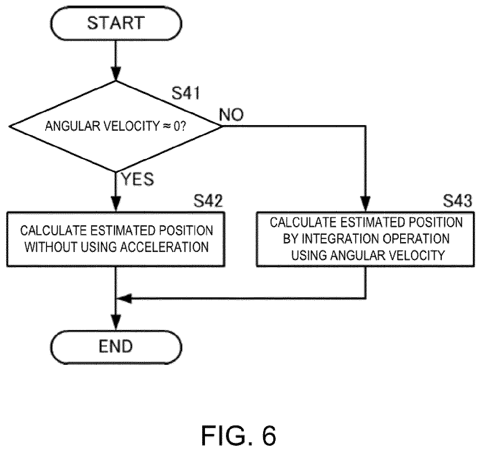

Note that in the above description, the mode in which the processings performed by the course estimating device 10 is realized by a plurality of functional parts is illustrated. However, the plurality of processings are programmed and stored in a storage medium, and this program may be read and executed by a processor, such as a computer. In this case, the processor may perform processings according to flowcharts illustrated in Figs. 5 and 6.

Fig. 5 is a flowchart of the course estimation according to the embodiment of the present disclosure. Fig. 6 is a flowchart of the calculation of the estimated position according to the embodiment of the present disclosure. Note that, since the concrete realization method of each processing is the same as the processing of each functional part, description thereof is omitted.

As illustrated in Fig. 5, the processor may calculate the current position P(0) (S11). The processor may calculate the angular velocity $\omega(t)$. The processor may calculate the horizontal ground speed Vn using the yaw angle $\psi(t)$ of the attitude angle, the ground course COG(t), and the ground speed SOG(t) (S13). The processor may calculate the estimated position P($\tau$) using the current position P(0), the angular velocity $\omega$, and the horizontal ground speed Vn($\tau$) at the estimation time $\tau$.

In detail, as illustrated in Fig. 6, if the angular velocity $\omega$ is substantially 0, i.e., if the processor detects that the angular velocity $\omega$ is below the turning detection threshold (S41: YES), the processor may calculate the estimated position P($\tau$) without using the acceleration (S42). If the angular velocity $\omega$ greatly differs from 0, i.e., if the processor detects that the angular velocity $\omega$ exceeds the turning detection threshold (S41: NO), the processor may calculate the estimated position P($\tau$) by the integration operation using the angular velocity which is the acceleration in the turning direction (S43).

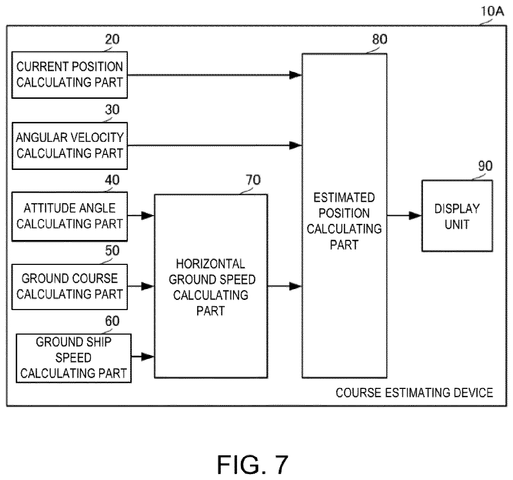

Next, a course estimating device, a method of estimating the course, and a course estimating program according to a second embodiment will be described with reference to the figure. Fig. 7 illustrates a block of the course estimating device according to the second embodiment of the present disclosure.

As illustrated in Fig. 7, a course estimating device 10A according to the second embodiment of the present disclosure differs from the course estimating device 10 according to the first embodiment in that a display unit 90 is added. Other configurations of the course estimating device 10A are similar to those of the course estimating device 10, and therefore, description of similar parts is omitted.

The estimated position calculating part 80 may output the calculated estimated position to the display unit 90. The display unit 90 may display this estimated position. Moreover, when the estimated course is calculated, the estimated position calculating part 80 may output this estimated course to the display unit 90. The display unit 90 may display the estimated course.

By having such a configuration, an operator can visually recognize the estimated position and the estimated course easily.

Note that the attitude angle calculating part 40, the ground course calculating part 50, and the ground ship speed calculating part 60 may be provided separately from the course estimating devices 10 and 10A. Further, the current position calculating part 20 and the angular velocity calculating part 30 may be provided separately from the course estimating devices 10 and 10A.

DESCRIPTION OF REFERENCE CHARACTERS

| | |
|---|---|
| 10, 10A: | Course Estimating Device |
| 20: | Current Position Calculating Part |
| 30: | Angular Velocity Calculating Part |
| 40: | Attitude Angle Calculating Part |
| 50: | Ground Course Calculating Part |
| 60: | Ground Ship Speed Calculating Part |
| 70: | Horizontal Ground Speed Calculating Part |
| 80: | Estimated Position Calculating Part |
| 90: | Display Unit |
| 100: | Ship |

**Claims**

1.  A course estimating device, comprising:

    a horizontal ground speed calculating part configured to calculate a horizontal ground speed based on an attitude angle, a ground course, and a ground ship speed of a movable body;

an angular velocity calculating part configured to measure or calculate an angular velocity of the movable body; and

an estimated position calculating part configured to calculate an estimated position, using a period of time from a current time point to an estimation time point, the horizontal ground speed, and an integration operation of the angular velocity when the angular velocity exceeds the turning detection threshold.

2.  The course estimating device of claim 1, wherein the estimated position calculating part calculates the estimated position without using the angular velocity, when the angular velocity is below the turning detection threshold.

3.  The course estimating device of claim 1 or 2, comprising an attitude angle calculating part configured to calculate the attitude angle using carrier phases of positioning signals.

4.  The course estimating device of any one of claims 1 to 3, comprising a ground course calculating part configured to calculate the ground course using carrier phases of positioning signals.

5.  The course estimating device of claim 3, wherein the attitude angle calculating part calculates at least a yaw angle of the attitude angle.

6.  The course estimating device of any one of claims 1 to 5, wherein the angular velocity calculating part calculates the angular velocity using carrier phases of positioning signals or an output of an inertia sensor.

7.  The course estimating device of any one of claims 1 to 6, wherein the estimated position calculating part calculates the estimated positions at a plurality of estimation time points, and calculates the estimated course connecting the estimated positions.

8.  The course estimating device of claim 7, comprising a display unit configured to display the estimated position and the estimated course.

9.  A method of estimating a course, comprising the steps of:

    calculating a horizontal ground speed based on an attitude angle, a ground course, and a ground ship speed of a movable body;
    measuring or calculating an angular velocity of the movable body; and
    calculating an estimated position, using a period of time from a current time point to an estimation time point, the horizontal ground speed, and an integration operation of the angular velocity when the angular velocity exceeds a turning detection threshold.

10. The method of claim 9, wherein the calculating the estimated position includes calculating the estimated position without using the angular velocity, when the angular velocity is below the turning detection threshold.

11. The method of claim 9 or 10, wherein the attitude angle is calculated using carrier phases of positioning signals.

12. The method of any one of claims 9 to 11, wherein the ground course is calculated using carrier phases of positioning signals.

13. The method of claim 11, wherein the calculating the attitude angle includes calculating at least a yaw angle of the attitude angle.

14. The method of any one of claims 9 to 13, wherein the calculating the angular velocity includes calculating the angular velocity using carrier phases of positioning signals or an output of an inertia sensor.

15. A course estimating program configured to cause a processor to execute processings, the processings comprising:

    calculating a horizontal ground speed based on an attitude angle, a ground course, and a ground ship speed of a movable body;
    measuring or calculating an angular velocity of the movable body; and
    calculating an estimated position, using a period of time from a current time point to an estimation time point, the horizontal ground speed, and an integration operation of the angular velocity when the angular velocity exceeds a turning detection threshold.

16. The course estimating program of claim 15, wherein the calculating the estimated position includes calculating the estimated position without using the angular velocity, when the angular velocity is below the turning detection threshold.

17. The course estimating program of claim 15 or 16, wherein the attitude angle is calculated using carrier phases of positioning signals.

18. The course estimating program of any one of claims 15 to 17, wherein the ground course is calculated using carrier phases of positioning signals.

19. The course estimating program of claim 17, wherein the calculating the attitude angle includes calculating at least a yaw angle of the attitude angle.

20. The course estimating program of any one of claims 15 to 19, wherein the calculating the angular velocity includes calculating the angular velocity using carrier phases of positioning signals or an output of an inertia sensor.

FIG. 1

FIG. 2

(A)
——: ESTIMATED COURSE OF
PRESENT APPLICATION
----: ACTUAL COURSE

(B)
——: ESTIMATED COURSE BY SPEED
AND CHANGE AMOUNT OF SPEED
----: ACTUAL COURSE

LATITUDE

LONGITUDE

LATITUDE

LONGITUDE

(C)
——: ESTIMATED COURSE BY SPEED
----: ACTUAL COURSE

(D)
——: ESTIMATED COURSE
BY SPEED AND ACCELERATION
----: ACTUAL COURSE

LATITUDE

LONGITUDE

LATITUDE

LONGITUDE

FIG. 3

(A)

(LATITUDE)

——: ESTIMATED COURSE OF
PRESENT APPLICATION

·····: COURSE USING SPEED

– · –: COURSE USING SPEED AND
CHANGE AMOUNT OF SPEED

– ··–: COURSE USING SPEED
AND ACCELERATION

STANDARD DEVIATION

ESTIMATION TIME

(B)

(LONGITUDE)

——: ESTIMATED COURSE OF
PRESENT APPLICATION

·····: COURSE USING SPEED

– · –: COURSE USING SPEED AND
CHANGE AMOUNT OF SPEED

– ··–: COURSE USING SPEED
AND ACCELERATION

STANDARD DEVIATION

ESTIMATION TIME

FIG. 4

START

S11
CALCULATE CURRENT POSITION

S12
CALCULATE ANGULAR VELOCITY

S13
CALCULATE HORIZONTAL
GROUND SPEED

S14
CALCULATE ESTIMATED POSITION

END

FIG. 5

```
                        ┌─────────────┐
                        │    START    │
                        └──────┬──────┘
                               │
                               ▼           S41
                          ╱─────────╲
                         ╱           ╲       NO
              ╱─ ANGULAR VELOCITY ≈ 0? ─╲──────────────┐
                         ╲           ╱                 │
                          ╲─────────╱                  │
                               │ YES                   │
                               ▼            S42         ▼           S43
              ┌───────────────────────────┐  ┌───────────────────────────┐
              │  CALCULATE ESTIMATED POSITION │  │  CALCULATE ESTIMATED POSITION │
              │  WITHOUT USING ACCELERATION   │  │  BY INTEGRATION OPERATION     │
              │                               │  │  USING ANGULAR VELOCITY       │
              └───────────────┬───────────────┘  └───────────────┬───────────────┘
                              │◄─────────────────────────────────┘
                              ▼
                        ┌─────────────┐
                        │     END     │
                        └─────────────┘
```

# FIG. 6

FIG. 7

| | | INTERNATIONAL SEARCH REPORT | International application No. |
| | | | PCT/JP2018/020513 |

**A. CLASSIFICATION OF SUBJECT MATTER**
Int.Cl. G01S15/60(2006.01)i, G01S19/42(2010.01)i, G01S19/53(2010.01)i, G01C21/16(2006.01)i

According to International Patent Classification (IPC) or to both national classification and IPC

**B. FIELDS SEARCHED**

Minimum documentation searched (classification system followed by classification symbols)
Int.Cl. G01S7/00-7/42, G01S7/52-7/64, G01S13/00-13/95, G01S15/00-15/96, G01S19/00-19/55, G01C21/00-21/36, B63B49/00

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-194806 A (JAPAN RADIO CO., LTD.) 27 July 2006, paragraphs [0019]-[0061], fig. 1-4 (Family: none) | 1-20 |
| A | Microfilm of the specification and drawings annexed to the request of Japanese Utility Model Application No. 204162/1983 (Laid-open No. 111214/1985) (YOKOGAWA HOKUSHIN ELECTRIC CORP.) 27 July 1985, specification, page 4, line 5 to page 6, line 3, fig. 4-5 (Family: none) | 1-20 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 August 2018 (06.08.2018) | 21 August 2018 (21.08.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/020513

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-25671 A (FURUNO ELECTRIC CO., LTD.) 05 February 2015, abstract, fig. 1 & US 2015/0032304 A1, abstract, fig. 1 & EP 2848963 A2 & CN 104345326 A | 1-20 |
| A | JP 2014-145614 A (FURUNO ELECTRIC CO., LTD.) 14 August 2014, abstract, fig. 2 (Family: none) | 1-20 |
| A | US 2011/0210865 A1 (ELECTRONICS AND TELECOMMUNICATIONS RESEARCH INSTITUTE) 01 September 2011, paragraphs [0046]-[0068], fig. 2 & KR 10-2011-0098465 A | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 0428636 B